# EUROPÄISCHE PATENTSCHRIFT

(11) **EP 2 956 975 B1**
(45) Veröffentlichungstag und Bekanntmachung des Hinweises auf die Patenterteilung: **20.12.2017**
(21) Anmeldenummer: 14704339.2
(22) Anmeldetag: 13.02.2014
(51) Int. Cl.: H01M 2/10, H01M 2/28, H01M 10/04, H01M 10/16, H01M 2/38, H01M 10/42

(54) **FIXIERUNGSELEMENT UND AKKUMULATOR**
FIXING ELEMENT AND BATTERY
ÉLÉMENT DE FIXATION ET ACCUMULATEUR

(30) Priorität: 15.02.2013 DE 102013101527
(43) Veröffentlichungstag der Anmeldung: 23.12.2015
(73) Patentinhaber: Johnson Controls Autobatterie GmbH & Co. KGaA, 30419 Hannover (DE)
(72) Erfinder: SCHWAB, Julius Martin, 30449 Hannover (DE); KOCH, Ingo, 31789 Hameln (DE); TRAISIGKHACHOL, Ornwasa, 30952 Ronnenberg (DE); IDE, Bernd, 30419 Hannover (DE); STAFFELDT, Armin, 27389 Lauenbrück (DE)
(74) Vertreter: Trinks, Ole
(86) Internationale Anmeldenummer: PCT/EP2014/052793
(87) Internationale Veröffentlichungsnummer: WO 2014/125008

(56) Entgegenhaltungen:
- EP-A1- 0 291 618
- FR-A1- 2 921 760
- GB-A- 709 254
- JP-A- H07 201 356
- US-A- 4 122 244
- US-A- 4 221 850
- US-A1- 2012 052 341

## Beschreibung

Die Erfindung betrifft ein Fixierungselement zur mechanischen Fixierung eines Elektrodenplattensatzes eines elektrochemischen Akkumulators in einem Zellraum eines Gehäuses des Akkumulators gemäß dem Oberbegriff des Anspruchs 1. Die Erfindung betrifft außerdem einen Akkumulator mit einem solchen Fixierungselement gemäß Anspruch 12. Allgemein betrifft die Erfindung das Gebiet elektrochemischer Akkumulatoren. Solche Akkumulatoren haben z. B. im Bereich der Kraftfahrzeuge eine weite Verbreitung in Form von Starterbatterien gefunden. Die Erfindung betrifft sowohl das Gebiet elektrochemischer Akkumulatoren mit flüssigem Elektrolyt als auch mit nicht-flüssigem Elektrolyt.

Insbesondere betrifft die Erfindung Blei-Säure-Akkumulatoren mit positiven und negativen Elektrodenplatten, die einen Elektrodenplattensatz bilden, von denen mindestens die Elektrodenplatten einer Polarität in Separatoren eingetascht sind. Ein solcher Akkumulator ist z. B. aus der EP 1 077 496 A2 bekannt.

Solche Akkumulatoren unterliegen im Betrieb, z. B. einem Kraftfahrzeug, starken Vibrations- bzw. Rüttelbelastungen. Hierdurch können Teile des Akkumulators, insbesondere de Elektrodenplattensätze beschädigt werden, was eine verringerte Lebensdauer des Akkumulators zur Folge haben kann. Ein im Stand der Technik vorbeschriebenes Fixierungselement ist aus JP H07 201356 A bekannt. Der Erfindung liegt die Aufgabe zugrunde, Möglichkeiten zur weiteren Verbesserung der Vibrationsfestigkeit solcher Akkumulatoren anzugeben.

Diese Aufgabe wird gemäß Anspruch 1 gelöst durch ein Fixierungselement zur mechanischen Fixierung eines Elektrodenplattensatzes eines elektrochemischen Akkumulators in einem Zellraum eines Gehäuses des Akkumulators, wobei das Gehäuse einen oder mehrere Zellräume aufweist und jeder Zellraum zur Aufnahme eines Elektrodenplattensatzes eingerichtet ist, wobei das Fixierungselement wenigstens einen ersten Fixierungsbereich aufweist, der zur mechanischen Fixierung des Elektrodenplattensatzes durch direkten oder indirekten mechanischen Kontakt mit diesem eingerichtet ist, wobei das Fixierungselement zusätzlich zur mechanischen Fixierung wenigstens eines Zellenverbinderelements des vom Fixierungselement mechanisch fixierten Elektrodenplattensatzes eingerichtet ist, wobei das Zellenverbinderelement zur elektrische Kontaktierung des Elektrodenplattensatzes mit einem benachbarten Elektrodenplattensatz oder einem Anschlusspol des Akkumulators vorgesehen ist, und wobei das Fixierungselement zur Fixierung des Zellenverbinderelements wenigstens einen zweiten Fixierungsbereich aufweist, der zur mechanischen Fixierung des Zellenverbinderelements durch direkten oder indirekten mechanischen Kontakt mit diesem eingerichtet ist. Im Falle eines direkten mechanischen Kontakts kann der erste Fixierungsbereich an dem Elektrodenplattensatz zur Anlage kommen, bzw. der zweite Fixierungsbereich kann an dem Zellenverbinderelements zur Anlage kommen. Im Falle eines indirekten mechanischen Kontakts kann zwischen dem ersten Fixierungsbereich und dem Elektrodenplattensatz bzw. dem zweiten Fixierungsbereich und dem Zellenverbinderelement ein Kraftvermittler vorgesehen sein, z.B. ein Klebstoff, eine Vergußmasse oder elastisches Bauteil. Ferner weist das erfindungsgemäße Fixierungselement gemäß dem Anspruch 1 mindestens drei voneinander beabstandete Befestigungsbereiche auf, die zur Befestigung des Fixierungselements am Gehäuse des Akkumulators eingerichtet sind, wobei mindestens einer der Befestigungsbereiche mit einem vertikalen, etwa mittigen Schlitz dazu ausgebildet ist, eine in einem Gehäuseunterteil vorhandene Gehäuserippe aufzunehmen, und wobei einer, mehrere oder alle Befestigungsbereiche an vom Zentrum des Fixierungselements fortweisenden äußeren Bereichen des Fixierungselements gebildet sind. Die Erfindung hat den Vorteil, dass mit ein und demselben Fixierungselement sowohl der Elektrodenplattensatz als auch das Zellenverbinderelement mechanisch fixiert werden kann und damit bereits die wesentlichen in einem Zellraum des Gehäuses des Akkumulators angeordneten Elemente fixiert und somit vor Vibrationsschäden geschützt sind. Vorteilhaft kann eine mechanische Fixierung sowohl des Elektrodenplattensatzes als auch mindestens eines Zellenverbinderelements durch ein einziges Fixierungselement realisiert werden. Dies hat insbesondere bei der Serienfertigung von elektrochemischen Akkumulatoren große Vorteile und führt zu einer Rationalisierung des Herstellprozesses, da nicht mehrere einzelne Teile eingesetzt und an Gehäusewänden befestigt werden müssen, sondern nur ein oder zwei Fixierungselemente pro Zellraum eingesetzt werden muss. Mit dem erfindungsgemäßen Fixierungselement kann eine Verminderung und ein Aufnehmen von Bewegungsenergie sowohl der Zellenverbinder als auch des Elektrodenplattensatzes eines Zellraums erfolgen, die durch Vibration und Bewegung des Akkumulators, z. B. in Folge eines fahrenden Fahrzeugs, hervorgerufen werden. Hierdurch kann zuverlässig verhindert werden, dass die Zellenverbinder und die Elektrodenplatten eines Elektrodenplattensatzes irreversible Schäden erleiden.

Als Elektrodenplattensatz wird eine Anordnung mehrerer Elektrodenplatten verstanden, z.B. abwechselnd positive und negative Elektrodenplatten. Hierbei können z.B. mindestens die Elektrodenplatten einer Polarität in Separatoren eingetascht sein. Als Elektrodenplattensatz wird dann die Anordnung eingetaschter und/oder nicht eingetaschter Elektrodenplatten verstanden. Sofern die Separatoren an der Oberseite über die Elektrodenplatten hinausstehen, so erfolgt die mechanische Fixierung des Elektrodenplattensatzes vorrangig oder ausschließlich durch direkten oder indirekten mechanischen Kontakt des ersten Fixierungsbereichs mit den hervorstehenden Separatoren.

Die Erfindung eignet sich grundsätzlich für alle Arten elektrochemischer Akkumulatoren. Besonders vorteilhaft zeigt sich der Einsatz der Erfindung bei sog. NKW-Batterien, also Akkumulatoren für Nutzkraftwagen wie Lastkraftwagen, Busse, Auflieger und Anhänger. In solchen Fahrzeugen verwendete Akkumulatoren unterliegen einer besonders hohen Vibrationsbelastung.

Es ist möglich, das Fixierungselement über den ersten Fixierungsbereich an dem Elektrodenplattensatz zu befestigen und über den zweiten Fixierungsbereich an dem zu fixierenden Zellenverbinderelement. Hierdurch wird zumindest eine Fixierung des Elektrodenplattensatzes relativ zum Zellenverbinderelement realisiert, was auch bereits vibrationsmindernd wirkt. Zusätzlich ist es erfindungsgemäß vorgesehen das Fixierungselement auch mit Teilen des Gehäuses des Akkumulators, z. B. Wänden des Gehäuses zu verbinden. Hierdurch kann die Fixierung des Elektrodenplattensatzes und des Zellenverbinderelements weiter verbessert werden und eine auf diese Elemente einwirkende Vibrationsbelastung weiter vermindert werden. Erfindungsgemäß weist das Fixierungselement mehrere voneinander beabstandete Befestigungsbereiche auf, die zur Befestigung des Fixierungselements am Gehäuse des Akkumulators eingerichtet sind. Dies hat den Vorteil, dass das Fixierungselement am Gehäuse des Akkumulators befestigt werden kann und damit Bewegungen des Elektrodenplattensatzes und des Zellenverbinderelements gegenüber dem Gehäuse des Akkumulators unterbunden oder zumindest gemindert werden können. Das Fixierungselement weist erfindungsgemäß mindestens drei voneinander beabstandete Befestigungsbereiche auf. Hierdurch kann eine mechanisch definierte, robuste Befestigung des Fixierungselements an dem Gehäuse des Akkumulators realisiert werden, die zudem statisch bestimmt ist. Erfindungsgemäß sind einer, mehrere oder alle Befestigungsbereiche an vom Zentrum des Fixierungselements fortweisenden äußeren Bereichen des Fixierungselements gebildet. Die Befestigungsbereiche können z. B. als äußere Befestigungsflächen, z. B. Schweiß- oder Klebeflächen, ausgebildet sein.

Gemäß einer vorteilhaften Weiterbildung der Erfindung sind einer, mehrere oder alle Befestigungsbereiche zur Befestigung an einer inneren Gehäusewand des Akkumulators oder an einer inneren Gehäusewand eines Zellraums des Akkumulators eingerichtet. Dies erlaubt eine einfache und schnelle Platzierung des Fixierungselements im Gehäuse bzw. im Zellraum des Gehäuses des Akkumulators sowie eine schnelle Befestigung an einer oder mehreren inneren Gehäusewänden.

Gemäß einer vorteilhaften Weiterbildung der Erfindung sind einer, mehrere oder alle Befestigungsbereiche zur Befestigung am Gehäuse des Akkumulators mittels einer stoffschlüssigen Verbindung eingerichtet, insbesondere durch Anspritzen, Anschmelzen, Anschweißen oder Ankleben am Gehäuse des Akkumulators. Dies erlaubt ebenfalls eine rationelle Fertigung des Akkumulators, indem das Fixierungselement einfach und schnell an dem Gehäuse des Akkumulators befestigt werden kann. Die stoffschlüssige Verbindung sorgt außerdem für eine ausreichende Robustheit der Befestigung des Fixierungselements am Gehäuse des Akkumulators.

Gemäß einer vorteilhaften Weiterbildung der Erfindung ist das Fixierungselement als Fixierungsbrücke ausgebildet, die zur Befestigung an wenigstens zwei gegenüberliegenden Wänden eines Zellraums eingerichtet ist und damit eine Brücke zwischen diesen Wänden bildet. Dies erlaubt eine stabile Befestigung des Fixierungselements am Gehäuse des Akkumulators und zugleich eine sichere mechanische Fixierung der zu fixierenden Elemente, nämlich des Elektrodenplattensatzes und des Zellenverbinderelements.

Gemäß einer vorteilhaften Weiterbildung der Erfindung ist das Fixierungselement dazu eingerichtet, in dem Zellraum oberhalb des Elektrodenplattensatzes angeordnet zu werden, bezogen auf die spezifikationsgemäße Normal-Einbaulage eines elektrochemischen Akkumulators. In Normal-Einbaulage befindet sich der Akkumulator üblicherweise mit seinem Gehäuseboden in Horizontallage, wobei der Gehäuseboden unten liegt. Durch das Anordnen des Fixierungselements oberhalb des Elektrodenplattensatzes kann dieses bei der Fertigung des Akkumulators nach dem Einsetzen des Elektrodenplattensatzes mit dem Zellverbinderelement einfach und schnell von oben aufgesetzt werden und dann mit dem Gehäuse verbunden werden. Der Elektrodenplattensatz und das Zellenverbinderelement sind dann sozusagen zwischen dem Fixierungselement und dem Gehäuseboden des Akkumulators festgeklemmt und damit sicher fixiert.

Gemäß einer vorteilhaften Weiterbildung der Erfindung ist das Fixierungselement zur gleichzeitigen Fixierung wenigstens zweier, an gegenüberliegenden Endbereichen eines Elektrodenplattensatzes angeordneter Zellenverbinderelemente des Elektrodenplattensatzes eingerichtet und weist hierzu zwei entsprechende Fixierungsbereiche auf. Hierdurch wird die Funktionalität des Fixierungselements weiter erhöht. Mit einem einzigen Fixierungselement können somit der Elektrodenplattensatz und zugleich zwei Zellenverbinderelemente mechanisch fixiert werden und vor Vibrationsbelastungen geschützt werden.

Sofern das Fixierungselement zur Fixierung des Elektrodenplattensatzes und nur eines Zellenverbinderelements ausgebildet ist, kann es sozusagen wie ein "halbes" Fixierungselement der zuvor erläuterten Art ausgebildet sein, bzw. als "halbe" Fixierungsbrücke. Es werden dann zur Fixierung zweier Zellenverbinderelemente eines Zellraums zwei Fixierungselemente eingesetzt, die jeweils ein Zellenverbinderelement und zugleich den Elektrodenplattensatz des Zellraums fixieren.

Gemäß einer vorteilhaften Weiterbildung der Erfindung ist das Fixierungselement symmetrisch ausgebildet, insbesondere bezüglich einer Symmetrieachse spiegelsymmetrisch. Dies hat den Vorteil, dass das Einsetzen des Fixierungselements in seiner Einbauposition im Zellraum vereinfacht wird, da keine bestimmte Ausrichtung zu beachten ist. Vielmehr kann das Fixierungselement sowohl in einer ersten Orientierung als auch in einer dazu um 180° gedrehten zweiten Orientierung eingebaut werden und erfüllt in beiden Fällen gleichermaßen seine Funktion.

Gemäß einer vorteilhaften Weiterbildung der Erfindung ist das Fixierungselement zur mechanischen Fixierung des Elektrodenplattensatzes und/oder des Zellenverbinderelements in vertikaler Richtung und gleichzeitig in horizontaler Richtung eingerichtet, jeweils bezogen auf die spezifikationsgemäße Normal-Einbaulage eines elektrochemischen Akkumulators. Durch diese Fixierung in mehreren Raumrichtungen kann eine besonders belastungsarme Anordnung der Zellenverbinderelemente und des Elektrodenplattensatzes in dem Gehäuse des Akkumulators realisiert werden. Hierdurch werden die genannten Bauteile besonders zuverlässig vor Vibrationsbelastungen und daraus resultierenden Schäden geschützt.

Die Fixierung des Elektrodenplattensatzes und/oder des Zellenverbinderelements in horizontaler Richtung kann durch entsprechende Klemmkraft und hierdurch entstehende Reibung zwischen dem Fixierungselement und dem Elektrodenplattensatz bzw. dem Zellenverbinderelement realisiert werden, durch Klebstoff oder zusätzlich oder alternativ durch entsprechend geformte erste bzw. zweite Fixierungsbereiche des Fixierungselements, die sich formschlüssig mit dem Elektrodenplattensatz bzw. dem Zellenverbinderelement verbinden lassen.

Gemäß einer vorteilhaften Weiterbildung der Erfindung weist das Fixierungselement an einer zum zu fixierenden Elektrodenplattensatz weisenden Unterseite wenigstens ein Pufferelement aus einem Material auf, das eine höhere Elastizität besitzt als das Material des Fixierungselements. Das Fixierungselement kann z. B. aus Polypropylen (PP) hergestellt sein. Das Pufferelement kann z. B. aus einem Elastomer bestehen, z. B. in Form eines gummiartigen Elements. Es kann insbesondere ein thermoplastisches Elastomer verwendet werden. Dies hat den Vorteil, dass das Pufferelement durch Anspritzen am Fixierungselement angebracht werden kann. Alternativ kann das Pufferelement auch am Fixierungselement angeklebt oder angeschraubt werden.

Gemäß einer vorteilhaften Weiterbildung der Erfindung ist das Pufferelement im ersten Fixierungsbereich am Fixierungselement angeordnet. Das Pufferelement kann insbesondere als streifenartiges Pufferelement ausgebildet sein, das im Wesentlichen den gesamten ersten Fixierungsbereich des Fixierungselements bedeckt.

Gemäß einer vorteilhaften Weiterbildung der Erfindung weist das Fixierungselement einen Befestigungsbereich für ein oder mehrere Mischelemente auf, die zum Durchmischen des flüssigen Elektrolyten des Akkumulators eingerichtet sind, und/oder ist einstückig mit einem oder mehreren Mischelementen als ein Bauteil ausgebildet. Durch solche kann Mischelemente die vielfache Funktionalität des Fixierungselements noch weiter gesteigert werden. Das Fixierungselement kann dann zugleich als Träger für ein oder mehrere Mischelemente dienen, so dass für die Befestigung der Mischelemente keine gesonderten Bauteile erforderlich sind. Sofern ein oder mehrere Mischelemente einstückig mit dem Fixierungselement ausgebildet sind, kann ein solches Bauteil z.B. günstig als Kunststoffspritzteil hergestellt werden.

Gemäß einer vorteilhaften Weiterbildung der Erfindung weist das Fixierungselement eine oder mehrere Öffnungen auf, die zur Durchführung eines Anschlusspols des Akkumulators eingerichtet sind. Dies hat den Vorteil, dass durch die eine oder mehreren Öffnungen die Anschlusspole des Akkumulators hindurchgeführt werden, so dass bei der Montage des Fixierungselements keine besonderen Maßnahmen beim Einbau in einen Zellraum, der auch einen Anschlusspol aufweist, zu treffen sind. Vielmehr lässt sich das Fixierungselement einfach einsetzen und wird dabei mit einer Öffnung über den Anschlusspol geführt, so dass dieser durch die Öffnung hindurchragt. Das Fixierungselement lässt sich damit sehr universell anwenden. Vorteilhaft können die Öffnungen des Fixierungselements ebenfalls symmetrisch, insbesondere spiegelsymmetrisch, vorgesehen sein, so dass auch die Einbaulage des Fixierungselements hinsichtlich der Anschlusspole variabel handhabbar ist.

Gemäß einer vorteilhaften Weiterbildung der Erfindung ist wenigstens ein Mischelement an dem Fixierungselement angeordnet, wobei das Mischelement zum Einbau in ein Gehäuse eines mit flüssigem Elektrolyten betriebenen elektrochemischen Akkumulators eingerichtet ist, um den Elektrolyten in Folge von auf den Akkumulator im Betrieb ausgeübten Kräften und/oder Bewegungen zu durchmischen, wobei das Mischelement als an gegenüberliegenden Endbereichen mit jeweils wenigstens einer Öffnung versehener Hohlkörper ausgebildet ist, so dass in dem Hohlkörper ein Kanal gebildet ist, der in den gegenüberliegenden Endbereichen in die jeweilige wenigstens eine Öffnung mündet und dort umlaufend vom Material des Mischelements berandet ist, wobei das Mischelement im Bereich eines oberen Endbereichs, der dazu eingerichtet ist, beim Einbau in das Gehäuse oberhalb eines gegenüberliegenden unteren Endbereichs angeordnet zu sein, einen Volumenraum aufweist, dessen Umfang erheblich größer ist als der Umfang darunterliegender Abschnitte des Mischelements, so dass die darunterliegenden Abschnitte des Mischelements wenigstens einen im Vergleich zur Querschnittsfläche des Volumenkörpers dünnen Strömungskanal bilden, wobei sich der Umfang des Hohlkörpers im Bereich des dünnen Strömungskanals unterhalb eines Übergangs von dem Volumenraum in den dünnen Strömungskanal in Richtung zum unteren Endbereich hin verringert.

Soweit von den Begriffen "oben" und "unten" Gebrauch gemacht wird, beziehen sich diese Angaben auf die spezifikationsgemäße Betriebslage des Akkumulators, d.h. eine im Wesentlichen horizontale Lage, bei der der Akkumulator-Deckel sowie dessen Einfüllöffnungen für den flüssigen Elektrolyten oben liegend sind. Bei einer üblichen, spezifikationsgemäßen Bewegungsbeanspruchung des Akkumulators ist eine gewisse Abweichung von der Horizontallage zulässig, wie es z.B. beim Betrieb eines Akkumulators in einem Kraftfahrzeug auftritt. Nicht spezifikationsgemäße Betriebslagen sind beispielsweise um 90° oder 180° gegenüber der Horizontallage gedrehte Lagen.

Diese Weiterbildung der Erfindung hat den Vorteil, dass mit dem Mischelement das gewünschte Durchmischen des Elektrolyten weiter verbessert wird. Hierdurch kann eine Säureschichtung in dem Akkumulator aufgehoben oder zumindest deutlich reduziert werden. Als Säureschichtung bezeichnet man unterschiedliche Säuredichten über die Höhe des Akkumulators. Das Mischelement erlaubt ein Durchmischen des Elektrolyten mit höherer Wirkungseffizienz in Folge der Umfangsverringerung und der damit verbundenen Verringerung des Strömungsquerschnitts des Hohlkörpers im Bereich des dünnen Strömungskanals. Das Mischelement erzeugt schon bei geringerer Bewegungsbeanspruchung des Akkumulators vergleichbare Durchmischeffekte wie Mischelemente aus dem Stand der Technik.

Das Mischelement kann z.B. aus Polypropylen oder einem anderen geeigneten Material, das flexibel und säurebeständig ist, hergestellt sein.

Das Mischelement kann hinsichtlich seiner Höhe, d.h. seiner Längserstreckung in Vertikalrichtung in der vorgesehenen Einbaulage in den Akkumulator, so ausgebildet sein, dass sich ein zyklischer Umlauf des Elektrolyten bei Bewegungsbeanspruchung des Akkumulators derart ergibt, dass Elektrolyt über die Oberkante des Mischelements hinüberschwappt und über die untere Öffnung wieder abläuft, wie es z.B. in US 5,096,787 beschrieben ist. In diesem Fall hat das Mischelement die Funktion einer hydrostatischen Pumpe.

Gemäß einer vorteilhaften Weiterbildung der Erfindung erstreckt sich das Mischelement mindestens soweit nach oben, dass bei spezifikationsgemäßer Bewegungsbeanspruchung des Akkumulators, wie sie z.B. bei einem fahrenden Fahrzeug auftritt, ein Überfließen von flüssigem Elektrolyten über den oberen Randbereich des Mischelements verhindert ist. Hierdurch kann vorteilhaft das Prinzip von kommunizierenden Röhren realisiert werden. Es wird eine Hin- und Herbewegung des Elektrolyten über eine kommunizierende Verbindung im unteren Bereich des Mischelements, d.h. durch die untere Öffnung, zwischen dem Volumenraum des Mischelements und dem umgebenden Zellraum des Akkumulators erzwungen und nicht, wie beim Prinzip der hydrostatischen Pumpe, ein Umwälzen des Elektrolyten. Dies hat den Vorteil, dass am Boden des Akkumulators angesammelter Schlamm dort verbleibt, da keine Umwälzung des Elektrolyten erfolgt. Die hierdurch erzwungene Elektrolytbewegung ist ausreichend, um den Elektrolyten soweit durchzumischen, dass eine Säureschichtung aufgehoben oder zumindest deutlich reduziert wird.

Die kommunizierende Verbindung im unteren Bereich des Mischelements, d.h. die untere Öffnung, durch den der flüssige Elektrolyt hindurchströmen kann, kann auf unterschiedliche Weise ausgestaltet sein, z.B. in Form eines Spalts oder in Form einer oder mehrerer Öffnungen im unteren Bereich des Mischelements. Die zuvor erwähnten Öffnungen können an verschiedenen Stellen des Mischelements angeordnet sein, vorzugsweise natürlich im unteren Bereich des Strömungskanals.

Gemäß einer vorteilhaften Weiterbildung der Erfindung ist das Mischelement als separates Bauteil hergestellt, das erst bei der Montage des Akkumulators in dessen Gehäuse eingesetzt wird. Das Mischelement kann z.B. als in einen Zellraum des Akkumulators einsteckbares Bauteil ausgebildet sein. Dies hat den Vorteil, dass das Mischelement separat hergestellt werden kann und bei Bedarf in den Zellraum eines Akkumulators eingesteckt werden kann. Auf diese Weise können auf kostengünstige Weise sowohl Akkumulatoren mit dem Mischelement als auch ohne das Mischelement hergestellt werden, ohne dass unterschiedliche Spritzgussformen für die Herstellung der Gehäuseteile der zwei Varianten des Akkumulators erforderlich wären, wie dies bei einem fest angeformten Wandelements erforderlich wäre. Zudem können auch Akkumulatoren aus bisheriger Serienfertigung in einfacher Weise, d.h. ohne große Aufwendungen bezüglich der Herstellungseinrichtungen, umgestellt werden auf Akkumulatoren mit integrierter Durchmischung in Form eines Mischelements.

Das Mischelement kann insbesondere als ringförmiger Hohlkörper ausgebildet sein, wobei als Ringform in diesem Fall nicht ausschließlich eine Kreisringform verstanden wird, sondern auch jegliche anders geformte Ringformen. Das Mischelement kann z.B. als mit Ausnahme der in den gegenüberliegenden Endbereichen vorgesehenen Öffnungen im Wesentlichen geschlossener Hohlkörper ausgebildet sein. Dies erlaubt eine einfache Herstellung des Mischelements, z.B. aus einem Kunststoffmaterial.

Vorteilhaft kann das Mischelement z.B. im Spritzgussverfahren mit einem Innendorn und einer Außenform hergestellt werden. Das Mischelement kann auch im Blasverfahren oder im Tiefziehverfahren als Hohlkörper hergestellt werden. Der sich hinsichtlich des Umfangs in Richtung zum unteren Endbereich hin verjüngende dünne Strömungskanal hat in diesem Zusammenhang den weiteren Vorteil, dass die Entformbarkeit des Mischelements beim Herstellprozess verbessert wird.

Gemäß einer vorteilhaften Weiterbildung der Erfindung verläuft die Umfangsverringerung im Bereich des dünnen Strömungskanals über die Längserstreckung des Mischelements diskontinuierlich mit einer oder mehreren Diskontinuitäten. Hieraus resultiert eine Art stufenartige Verringerung des Umfangs des Hohlkörpers. Hierdurch kann die Wirkungseffizienz des Mischelements hinsichtlich des durch Durchmischungseffekts des flüssigen Elektrolyten weiter verbessert werden. Durch das Vorsehen von einer oder mehreren Diskontinuitäten im Verlauf des Strömungskanals ergeben sich abgestuft ein oder mehrere Übergänge des Strömungswiderstands und damit der Verlangsamung oder Beschleunigung des Austauschs des Elektrolyten zwischen dem Volumenraum des Mischelements und dem Innenraum des Akkumulators. Vorteilhaft können im Bereich des dünnen Strömungskanals z.B. zwei oder drei solche Diskontinuitäten vorgesehen werden. Auch die Entformbarkeit des Mischelements beim Herstellprozess wird durch die Diskontinuitäten weiter verbessert.

Gemäß einer vorteilhaften Weiterbildung der Erfindung verlaufen eine oder mehrere Diskontinuitäten über die Längserstreckung des Mischelements linear, d.h. je nach Ausführungsform verläuft in diesen Bereichen die Umfangsverringerung oder die Querschnittsverringerung linear. Dies erlaubt eine einfache und kostengünstige Herstellung des Mischelements. Außerdem wird die mechanische Stabilität des dünnen Strömungskanals verbessert.

Gemäß einer vorteilhaften Weiterbildung der Erfindung weist das Mischelement wenigstens zwei voneinander getrennte dünne Strömungskanäle auf, die mit dem gemeinsamen Volumenraum verbunden sind. Es können einer, mehrere oder alle der voneinander getrennten dünnen Strömungskanäle gemäß den zuvor erwähnten Merkmalen des dünnen Strömungskanals ausgebildet sein, insbesondere mit einer oder mehreren Diskontinuitäten.

Gemäß einer vorteilhaften Weiterbildung der Erfindung weist das Mischelement zumindest an einer Seite des Hohlkörpers eine Einbuchtung auf, die in Längsrichtung des Mischelements verläuft und zur Aufnahme einer Gehäuserippe des Akkumulators eingerichtet ist. Dies erlaubt eine einfache und sichere mechanische Befestigung des Mischelements in dem Akkumulatorgehäuse, sofern dieses mit inneren Gehäuserippen ausgebildet ist. In diesem Fall sind keine zusätzlichen mechanischen Fixierungsmittel erforderlich. Die Einbuchtung kann insbesondere im Bereich des Volumenraums vorgesehen sein bzw. sich bis in diesen Raum erstrecken, so dass der Volumenraum geteilt ist.

Gemäß einer vorteilhaften Weiterbildung der Erfindung ist die Tiefe der Einbuchtung wenigstens so groß wie die Erstreckung des dünnen Strömungskanals in derselben Richtung, d.h. in Ersteckungsrichtung der Einbuchtung. Dies erlaubt eine besonders robuste mechanische Fixierung des Mischelements an der Gehäuserippe des Gehäuses des Akkumulators. Außerdem werden hierdurch wenigstens zwei getrennte dünne Strömungskanäle geschaffen.

Gemäß einer vorteilhaften Weiterbildung der Erfindung ist das Mischelement seitlich von einer flachen Seite einer plattenförmigen Elektrode in der Akkumulatorzelle angeordnet. Das Mischelement wird hierdurch nicht von den hervorstehenden, zusammengeschweißten Enden der Separatortaschen kraftbeaufschlagt bzw. gehalten, wie in DE 10 2010 048 428 A1 beschrieben, da es an der flachen Seite der plattenförmigen Elektrode angeordnet ist. Gemäß einer vorteilhaften Weiterbildung der Erfindung kann als Haltemittel zur mechanischen Fixierung des Mischelements in der Akkumulatorzelle ein in das Gehäuse des Akkumulators integriertes Bauteil vorgesehen sein. Insbesondere kann eine innere Gehäuserippe des Gehäuses des Akkumulators als Haltemittel genutzt werden.

Das Mischelement kann auch mit einem bekannten Fügeverfahren, z.B. Kunststoff-Schweißen, mit dem Gehäuse des Akkumulators bzw. der inneren Gehäuserippe verbunden sein und hierdurch lagefixiert sein.

Gemäß einer vorteilhaften Weitebildung der Erfindung ist das Mischelement zwischen einer plattenförmigen Elektrode und der Gehäusewand oder einer an der Gehäusewand gebildeten inneren Gehäuserippe angeordnet.

Gemäß einer vorteilhaften Weitebildung der Erfindung weist das Gehäuse des Akkumulators eine Längserstreckung auf, die die größte Abmessung der Maße Höhe, Breite und Länge des Gehäuses ist, und die Elektrodenplatten weisen eine Längserstreckung auf, die die größte Abmessung der Maße Höhe, Breite und Länge der einzelnen Elektrodenplatte ist, und die Elektrodenplatten in einer Akkumulatorzelle sind derart ausgerichtet, dass die Längserstreckung der Elektrodenplatten im Wesentlichen in Richtung der Längserstreckung des Gehäuses verläuft. Dies erlaubt eine günstige, den vorhandenen Bauraum gut ausnutzende Unterbringung einer hohen Zahl von Elektrodenplatten in dem Gehäuse bei gleichzeitiger günstiger Unterbringung von einem oder mehreren Mischelementen in dem Gehäuse.

Die eingangs genannte Aufgabe wird außerdem gemäß Anspruch 12 gelöst durch einen elektrochemischen Akkumulator mit einem Gehäuse, wobei das Gehäuse einen oder mehrere Zellräume aufweist und jeder Zellraum zur Aufnahme eines Elektrodenplattensatzes des Akkumulators eingerichtet ist, wobei ein Elektrodenplattensatz mit wenigstens einem Zellenverbinderelement verbunden ist, das zur elektrischen Kontaktierung des Elektrodenplattensatzes mit einem benachbarten Elektrodenplattensatz oder einem Anschlusspol des Akkumulators eingerichtet ist, wobei in dem Gehäuse wenigstens ein Fixierungselement der zuvor beschriebenen Art befestigt ist, derart, dass das Fixierungselement mit dem ersten Fixierungsbereich den Elektrodenplattensatz durch direkten oder indirekten mechanischen Kontakt mit diesem mechanisch fixiert und mit dem zweiten Fixierungsbereich das Zellenverbinderelement durch direkten oder indirekten mechanischen Kontakt mit diesem mechanisch fixiert. Außerdem wird ein nicht erfindungsgemäßes Verfahren zur Herstellung eines elektrochemischen Akkumulators mit folgenden Schritten beschrieben:
a) Bereitstellen eines Gehäuses des Akkumulators mit wenigstens einem Zellraum,
b) Einsetzen eines Elektrodenplattensatzes in den Zellraum,
c) Anbringen von wenigstens einem Zellenverbinder an dem Elektrodenplattensatz vor, nach oder bei dessen Einsetzen in den Zellraum
d) Einsetzen eines Fixierungselements der zuvor beschriebenen Art in den Zellraum derart, dass das Fixierungselement soweit gegen den Elektrodenplattensatz gedrückt wird, dass es mit dem ersten Fixierungsbereich den Elektrodenplattensatz durch direkten oder indirekten mechanischen Kontakt mit diesem mechanisch fixiert und mit dem zweiten Fixierungsbereich das Zellenverbinderelement durch direkten oder indirekten mechanischen Kontakt mit diesem mechanisch fixiert,
e) gegebenenfalls Befestigen des Fixierungselements an dem Gehäuse des Akkumulators,
f) Fertigstellen des Akkumulators.

Zur Befestigung des Fixierungselements können z. B. Befestigungsbereiche des Fixierungselements am Gehäuse des Akkumulators befestigt werden, z. B. durch Herstellen einer stoffschlüssigen Verbindung zwischen dem Befestigungsbereich und dem Gehäuse, insbesondere durch Anspritzen, Anschmelzen, Anschweißen oder Ankleben eines Befestigungsbereichs des Fixierungselements am Gehäuse des Akkumulators.

Die Erfindung wird nachfolgend anhand von Ausführungsbeispielen unter Verwendung von Zeichnungen näher erläutert.

Es zeigen:
- Figur 1: den grundsätzlichen Aufbau eines elektrochemischen Akkumulators und
- Figur 2: ein Fixierungselement in isometrischer Ansicht und
- Figur 3: einen Ausschnitt aus einem Zellraum eines Akkumulators mit darin eingesetztem Fixierungselement und
- Figur 4: einen Akkumulator mit mehreren Zellräumen und darin eingesetzten Fixierungselementen in einer Draufsicht und
- Figur 5: ein Fixierungselement mit daran befestigtem Mischelement in isometrischer Ansicht und
- Figur 6: einen Akkumulator mit mehreren Zellräumen und darin eingesetzten Fixierungselementen und Mischelementen in einer Draufsicht.

In den Figuren werden gleiche Bezugszeichen für einander entsprechende Elemente verwendet.

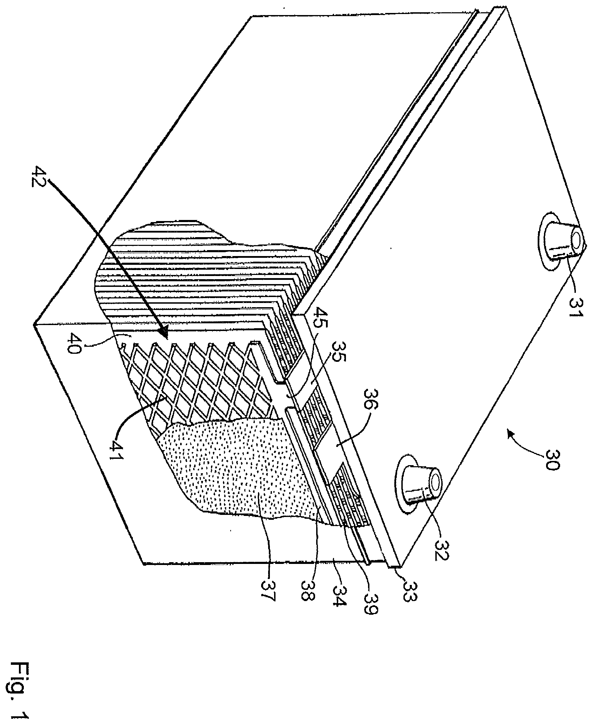

Die Figur 1 zeigt einen elektrochemischen Akkumulator in Form eines Blei-Säure-Akkumulators 30 mit einem Gehäuse 33, 34, das ein kastenförmiges Gehäuseunterteil 34 und einen auf das Gehäuseunterteil 34 aufgesetzten Deckel 33 aufweist. In dem Gehäuseunterteil 34 befindet sich ein Elektrodenplattensatz 42, der aus abwechselnd angeordneten negativen Elektrodenplatten 38 und positiven Elektrodenplatten 39 gebildet wird. Der Elektrodenplattensatz 42 befindet sich in einem Zellraum des Akkumulators 30. Der Akkumulator 30 kann mehrere separate Zellräume aufweisen, wobei in der Figur 1 ein mit nur einem Zellraum gebildeter Akkumulator 30 dargestellt ist. Die einzelnen Elektrodenplatten 38, 39 weisen ein Elektrodenplattengitter 12 auf, das mit einer pastösen aktiven Masse 37 versehen ist. Die Elektrodenplatten 38, 39 können in Separatormaterial 40 eingetascht sein, d. h. davon umgeben sein. Die Elektrodenplatten weisen jeweils an der Oberseite Kontaktfahnen 45 auf, die mit Zellenverbindern 35 bzw. 36 verbunden sind. Die Zellenverbinder 35, 36 dienen zur elektrischen Kontaktierung eines Elektrodenplattensatzes mit einem Elektrodenplattensatz einer benachbarten Akkumulatorzelle oder mit einem Anschlusspol 31, 32 des Akkumulators 30. Die Anschlusspole 31, 32 sind die äußeren Anschlusskontakte des Akkumulators.

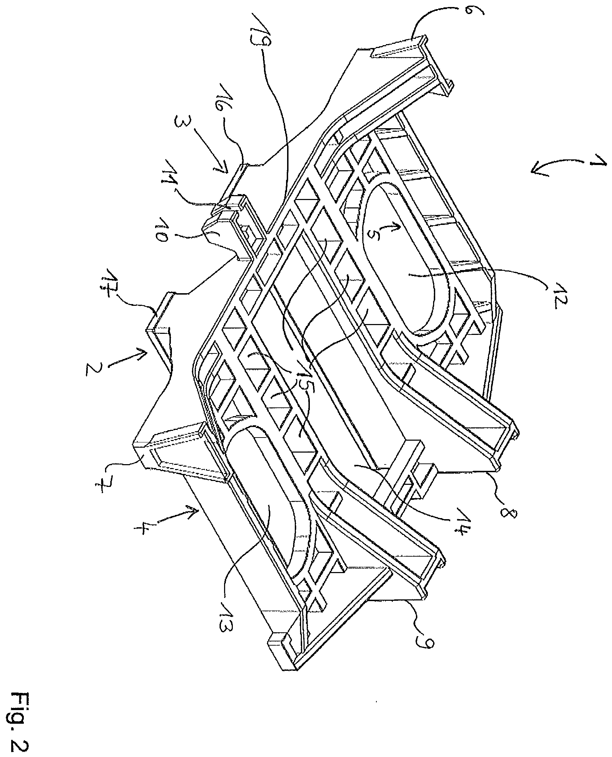

Die Figur 2 zeigt ein Fixierungselement 1 zur mechanischen Fixierung eines Elektrodenplattensatzes des Akkumulators 30. Das Fixierungselement 1 ist brückenartig ausgebildet und bildet daher eine Fixierungsbrücke. Das Fixierungselement 1 weist zwei erste Fixierungsbereiche 2, 3 auf, die zur mechanischen Fixierung eines Elektrodenplattensatzes 42 eingerichtet ist. Das Fixierungselement 1 ist in der Figur 2 in isometrischer Darstellung wiedergegeben, und zwar in der normalen Einbaulage in einem Akkumulator 30. Die ersten Fixierungsbereiche 2, 3 weisen dabei nach unten. Das Fixierungselement 1 wird bei der Anbringung im Gehäuse 33, 34 des Akkumulators 30 von oben auf den Elektrodenplattensatz 42 gesetzt. Die ersten Fixierungsbereiche 2, 3 berühren dann zunächst die Oberkanten der Separatoren 38. Das Fixierungselement 1 weist außerdem zwei zweite Fixierungsbereiche 4, 5 auf, die zum mechanischen Fixieren von Zellenverbinderelementen 35, 36 dienen. Die zweiten Fixierungsbereiche 4, 5 kommen bei vollständig eingesetztem Fixierungselement 1 an den Zellenverbinderelementen 35, 36 zur Anlage und fixieren diese mechanisch.

Die Montage des Fixierungselements 1 in einem Zellraum des Akkumulators 30 kann dabei derart erfolgen, dass das Fixierungselement 1 mit entsprechender Kraft von oben auf die Separatoren 40 des Elektrodenplattensatzes 42 gedrückt wird, bis auch die zweiten Fixierungsbereiche 4, 5 mit den zu fixierenden Zellenverbinderelementen 35, 36 zur Anlage kommen. Dabei ist eine ggf. erfolgende, leichte Verformung der Oberkanten der Separatoren 40 hinnehmbar. Zur zusätzlichen Abfederung zwischen den ersten Fixierungsbereichen 2, 3 und den Elektrodenplatten 39, 40 können dazwischen elastische Pufferelemente 16, 17 angeordnet werden, z. B. in Streifenform, und an den ersten Fixierungsbereichen 2, 3 befestigt werden. Die Pufferelemente 16, 17 absorbieren die Bewegungen der Elektrodenplatten 39, 40 in elastisch-dämpfender Weise. Zudem erfolgt durch die Pufferelemente 16, 17 ein gewisser Toleranzausgleich zwischen dem Kontaktpunkt, an dem die ersten Fixierungsbereiche 2, 3 mit den Elektrodenplatten 39, 40 bzw. den Separatoren 40 in Berührung kommen und dem Kontaktpunkt, an dem die zweiten Fixierungsbereiche 4, 5 mit den Zellenverbinderelementen 35, 36 in Kontakt kommen.

Wie in Figur 2 erkennbar ist, ist das Fixierungselement 1 mit einer Vielzahl von Öffnungen versehen und weist bereichsweise eine gitterartige Struktur auf. Im Bereich der zweiten Fixierungsbereiche 4, 5 weist das Fixierungselement 1 relativ große, z.B. längliche oder ovale, Öffnungen 12, 13 auf, die dazu dienen, einen jeweiligen Anschlusspol, der an einem Zellenverbinderelement 35, 36 angeordnet ist, durch das Fixierungselement 1 durchzuführen, so dass das Fixierungselement 1 auch problemlos in Zellräumen eingesetzt werden kann, in denen ein oder mehrere Anschlusspole vorhanden sind.

Das Fixierungselement 1 weist weitere Öffnungen 14, 15 auf, die mit einer Gewichts- und Materialersparnis einhergehen.

In vom Zentrum des Fixierungselements 1 fortweisenden äußeren Bereichen des Fixierungselements 1 weist dieses Befestigungsbereiche 6, 7, 8, 9, 10 auf, die zur Befestigung am Gehäuse 33, 34 des Akkumulators 30 eingerichtet sind. So erfolgt über die Befestigungsbereiche 6, 7 eine Befestigung des Fixierungselements 1 an einander gegenüberliegenden Gehäusewänden bzw. Wänden eines Zellraums des Akkumulators. Die Befestigungsbereiche 8, 9, die zur gleichen Seite des Fixierungselements 1 weisen, werden an ein und derselben Gehäusewand bzw. Wand eines Zellraums des Akkumulators 30 befestigt. Auf der den Befestigungsbereichen 8, 9 gegenüberliegenden Seite weist das Fixierungselement 1 einen zentralen Befestigungsbereich 10 mit einem vertikalen, etwa mittigen Schlitz 11 auf. Der Befestigungsbereich 10 dient zur Befestigung des Fixierungselements 1 an einer im Gehäuseunterteil 34 des Akkumulators 30 vorhandenen Gehäuserippe. Die Gehäuserippe ragt bei montiertem Fixierungselement 1 dann in den Schlitz 11.

Das Befestigen des Fixierungselements 1 am Gehäusematerial des Akkumulators 30 erfolgt vorteilhaft mittels einer stoffschlüssigen Verbindung, z. B. durch Anspritzen, Anschmelzen, Anschweißen oder Ankleben am Gehäuse des Akkumulators 30.

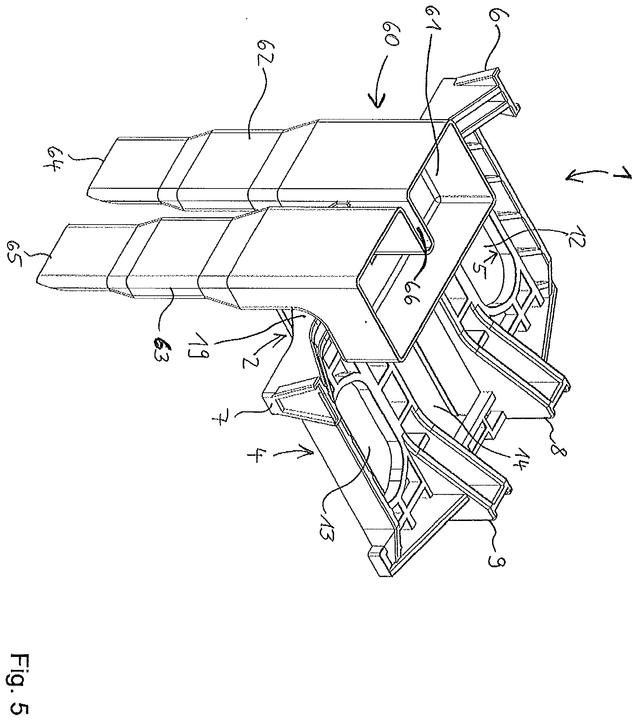

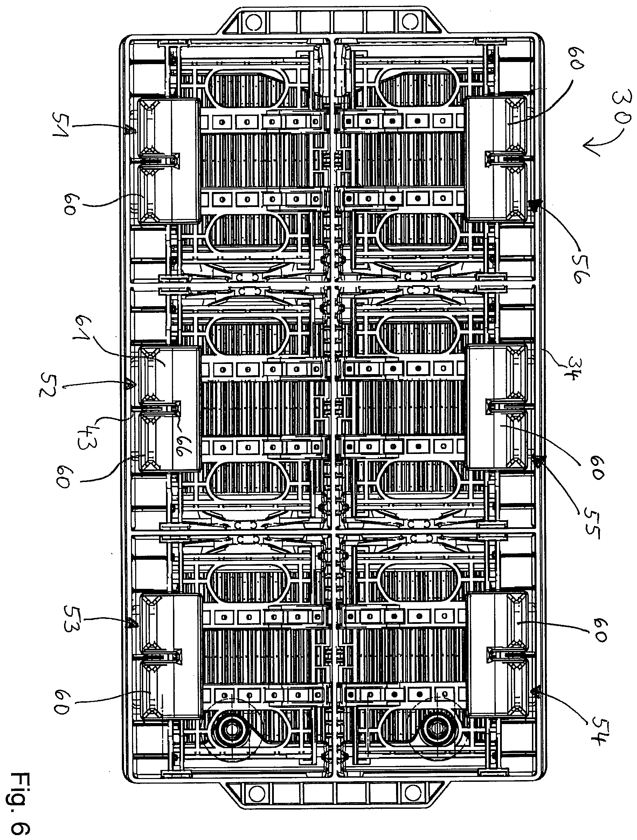

Das Fixierungselement 1 weist außerdem einen Befestigungsbereich 19 auf, an dem ein oder mehrere Mischelemente, die zum Durchmischen des flüssigen Elektrolyten des Akkumulators eingerichtet sind, befestigt werden können. Dies wird nachfolgend noch anhand der Figuren 5 und 6 erläutert.

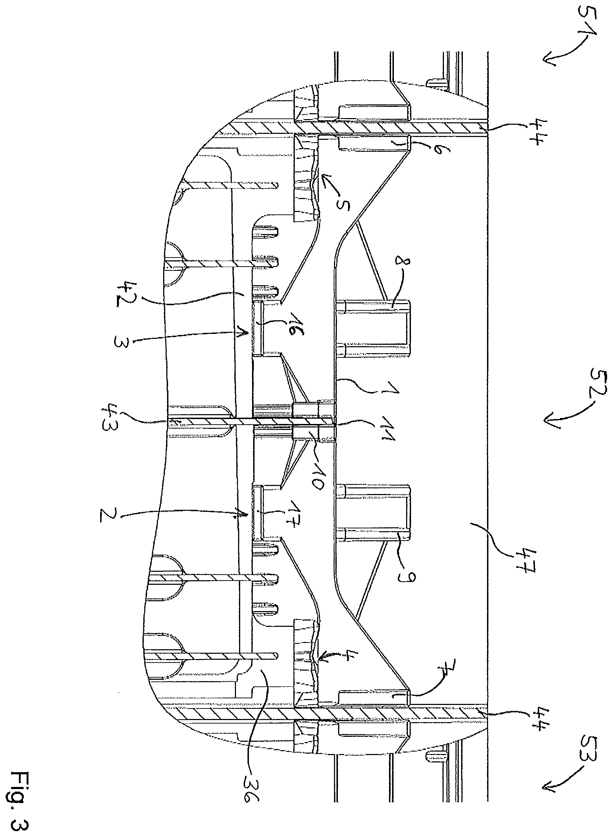

Die Figur 3 zeigt ein in einem Zellraum 52 des Akkumulators 30 eingesetztes Fixierungselement 1, das der Figur 2 entspricht. Der Zellraum 52 ist von links und rechts benachbarten Zellräumen 51, 53 umgeben. Erkennbar ist, dass die Befestigungsbereiche 6, 7 an jeweiligen gegenüberliegenden inneren Gehäusewänden 44 des Zellraums 52 befestigt sind. Die Befestigungsbereiche 8, 9 sind an einer weiteren Gehäusewand 47 des Zellraums 52 befestigt. Ferner ist die Befestigung des Befestigungsbereichs 10 auf einer Gehäuserippe 43 erkennbar. Die Figur 3 zeigt auch deutlich die gleichzeitige mechanische Fixierung sowohl des Elektrodenplattensatzes 42 über die ersten Fixierungsbereiche 2, 3 bzw. dessen Pufferelemente 16, 17 sowie die Befestigung der Zellenverbinderelemente 35, 36 über die zweiten Fixierungsbereiche 4, 5.

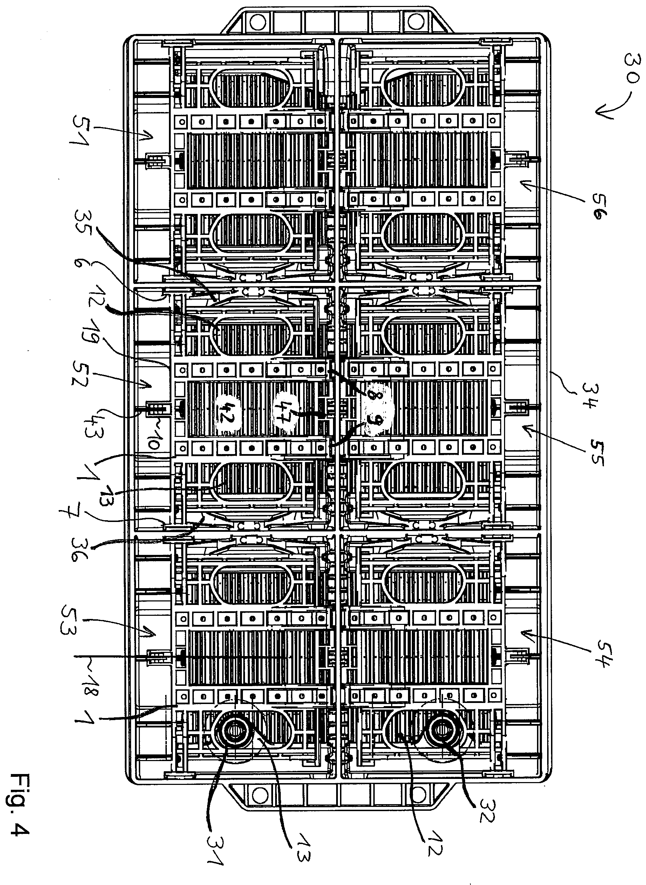

Die Figur 4 zeigt das Gehäuseunterteil 34 des Akkumulators 30 in einer Ansicht von oben, und zwar ohne das Deckelteil 33. In dem hier dargestellten Beispiel weist der Akkumulator 30 sechs Zellräume 51, 52, 53, 54, 55, 56 auf, die grundsätzlich vergleichbar ausgebildet sind und mit jeweiligen Elektrodenplattensätzen 42 und Fixierungselementen 1 bestückt sind, wie zuvor anhand der Figur 3 für den Zellraum 52 beschrieben. Erkennbar ist ferner, dass in den Zellräumen 53, 54 die jeweiligen Elektrodenplattensätze auf ihrer einen Seite mit den Anschlusspolen 31, 32 verbunden sind. Die Anschlusspole 31, 32 ragen dabei durch jeweilige Öffnungen 12, 13 des Fixierungselements 1.

Die Figur 5 zeigt das Fixierungselement 1 aus Figur 2 in derselben Ansicht, wobei an dem Fixierungselement 1 im Befestigungsbereich 19 ein Mischelement 60 befestigt ist. Das Mischelement 60 kann z. B. einfach auf das Fixierungselement 1 aufgesetzt sein, oder durch Anspritzen, Anschmelzen, Anschweißen oder Ankleben an dem Fixierungselement 1 befestigt sein. Das Mischelement 60 weist im oberen Bereich einen Volumenraum 61 auf, dessen Querschnittsfläche wesentlich größer ist als darunterliegende Abschnitte des Mischelements 60. Der Volumenraum 61 ist nach oben hin geöffnet, um zumindest einen Druckausgleich bei sich ändernder Flüssigkeitsmenge im Volumenraum 61 zu ermöglichen. Unterhalb des Volumenraums 61 schließen sich in Form zweier getrennter Strömungskanäle Abschnitte 62, 63 mit verringertem Querschnitt an, die schließlich am unteren Ende des Mischelements 60 in jeweilige untere Öffnungen 64, 65 münden. Die Strömungskanäle 62, 63 können einen sich in Längsrichtung verändernden Querschnitt aufweisen, insbesondere einen sich in Richtung zu den unteren Öffnungen 64, 65 verjüngenden Querschnitt. Die Querschnittsverjüngung kann, wie in der Figur 5 beispielhaft dargestellt, z. B. in zwei Stufen oder zwei Übergängen erfolgen. Es können auch mehr oder weniger Stufen bzw. Übergänge vorgesehen sein. Es kann auch ein gleichmäßiger Übergang des Querschnitts vom Volumenraum 61 zu den Öffnungen 64, 65 vorgesehen werden.

Das Mischelement 60 weist im oberen Bereich, insbesondere im Bereich des Volumenraums 61, eine Einbuchtung 66 auf, die sich nach unten hin in Form der zwei getrennten Strömungskanäle 62, 63 fortsetzt. In Folge der Einbuchtung 66 kann das Mischelement 60 leicht in einem Gehäuse eines Akkumulators befestigt werden, das an dieser Stelle eine Innenrippe im Zellraum aufweist. Vorteilhaft ist es, das Mischelement 60 so anzuordnen, dass die Einbuchtung 66 zumindest ungefähr mit der Nut 11 des Befestigungsbereichs 10 des Fixierungselements 1 fluchtet.

Die Figur 6 zeigt das Gehäuseunterteil 34 des Akkumulators 30 in der gleichen Ansicht wie die Figur 5, wobei auch wiederum alle sechs Zellräume 51, 52, 53, 54, 55, 56 mit jeweils einem Fixierungselement 1 versehen sind. Zusätzlich sind alle Zellräume 51, 52, 53, 54, 55, 56 jeweils mit einem auf dem jeweiligen Fixierungselement 1 aufgesetzten Mischelement 60 versehen. Das Mischelement 60 ist so eingesetzt, dass die Einbuchtung 66 des Volumenraums 61 über die Gehäuserippe 43 geführt werden kann. Die Gehäuserippe 43 wirkt dabei zusätzlich fixierend für das Mischelement 60.

## Patentansprüche

1. Fixierungselement (1) zur mechanischen Fixierung eines Elektrodenplattensatzes (42) eines elektrochemischen Akkumulators (30) in einem Zellraum (51, 52, 53, 54, 55, 56) eines Gehäuses (33, 34) des Akkumulators (30), wobei das Gehäuse (33, 34) einen oder mehrere Zellräume aufweist und jeder Zellraum zur Aufnahme eines Elektrodenplattensatzes (42) eingerichtet ist,
wobei das Fixierungselement (1) wenigstens einen ersten Fixierungsbereich (2, 3) aufweist, der zur mechanischen Fixierung des Elektrodenplattensatzes (42) durch direkten oder indirekten mechanischen Kontakt mit diesem eingerichtet ist,
wobei das Fixierungselement (1) zusätzlich zur mechanischen Fixierung wenigstens eines Zellenverbinderelements (35, 36) des vom Fixierungselement (1) mechanisch fixierten Elektrodenplattensatzes (42) eingerichtet ist,
wobei das Zellenverbinderelement (35, 36) zur elektrischen Kontaktierung des Elektrodenplattensatzes (42) mit einem benachbarten Elektrodenplattensatz (42) oder einem Anschlusspol (31, 32) des Akkumulators (30) vorgesehen ist, und
wobei das Fixierungselement (1) zur Fixierung des Zellenverbinderelements (35, 36) wenigstens einen zweiten Fixierungsbereich (4, 5) aufweist, der zur mechanischen Fixierung des Zellenverbinderelements (35, 36) durch direkten oder indirekten mechanischen Kontakt mit diesem eingerichtet ist,
**dadurch gekennzeichnet, dass**
das Fixierungselement (1) mindestens drei voneinander beabstandete Befestigungsbereiche (6, 7, 8, 9, 10) aufweist, die zur Befestigung des Fixierungselements (1) am Gehäuse (33, 34) des Akkumulators (30) eingerichtet sind, und wobei mindestens einer der Befestigungsbereiche (10) mit einem vertikalen, etwa mittigen Schlitz (11) dazu ausgebildet ist, eine in einem Gehäuseunterteil (34) vorhandene Gehäuserippe aufzunehmen, und wobei einer, mehrere oder alle Befestigungsbereiche (6, 7, 8, 9, 10) an vom Zentrum des Fixierungselements (1) fortweisenden äußeren Bereichen des Fixierungselements (1) gebildet sind.

2. Fixierungselement nach Anspruch 1,
**dadurch gekennzeichnet, dass**
einer, mehrere oder alle Befestigungsbereiche (6, 7, 8, 9, 10) zur Befestigung an wenigstens einer inneren Gehäusewand (44, 47) des Akkumulators (30) und/oder wenigstens einer inneren Gehäusewand (44, 47) eines Zellraums (51, 52, 53, 54, 55, 56) des Akkumulators eingerichtet sind.

3. Fixierungselement nach Anspruch 1 oder 2,
**dadurch gekennzeichnet, dass**
einer, mehrere oder alle Befestigungsbereiche (6, 7, 8, 9, 10) zur Befestigung am Gehäuse des Akkumulators (30) mittels einer stoffschlüssigen Verbindung eingerichtet sind, insbesondere durch Anspritzen, Anschmelzen, Anschweißen oder Ankleben am Gehäuse (33, 34) des Akkumulators (30).

4. Fixierungselement nach einem der vorhergehenden Ansprüche,
**dadurch gekennzeichnet, dass**
das Fixierungselement (1) als Fixierungsbrücke ausgebildet ist, die zur Befestigung an wenigstens zwei gegenüberliegenden Wänden (44) eines Zellraums (51, 52, 53, 54, 55, 56) eingerichtet ist und damit eine Brücke zwischen diesen Wänden (44) bildet.

5. Fixierungselement nach einem der vorhergehenden Ansprüche,
**dadurch gekennzeichnet, dass**
das Fixierungselement (1) dazu eingerichtet ist, in dem Zellraum (51, 52, 53, 54, 55, 56) oberhalb des Elektrodenplattensatzes (42) angeordnet zu werden, bezogen auf die spezifikationsgemäße Normal-Einbaulage eines elektrochemischen Akkumulators (30).

6. Fixierungselement nach einem der vorhergehenden Ansprüche,
**dadurch gekennzeichnet, dass**
das Fixierungselement (1) zur gleichzeitigen Fixierung wenigstens zweier, an gegenüberliegenden Endbereichen eines Elektrodenplattensatzes (42) angeordneter Zellenverbinderelemente (35, 36) des Elektrodenplattensatzes (42) eingerichtet ist und hierzu zwei entsprechende zweite Fixierungsbereiche (4, 5) aufweist.

7. Fixierungselement nach einem der vorhergehenden Ansprüche,
**dadurch gekennzeichnet, dass**
das Fixierungselement (1) symmetrisch ausgebildet ist, insbesondere bezüglich einer Symmetrieachse (18) spiegelsymmetrisch.

8. Fixierungselement nach einem der vorhergehenden Ansprüche,
**dadurch gekennzeichnet, dass**
das Fixierungselement (1) zur mechanischen Fixierung des Elektrodenplattensatzes (42) und/oder des Zellenverbinderelements (35, 36) in vertikaler Richtung und gleichzeitig in horizontaler Richtung eingerichtet ist, jeweils bezogen auf die spezifikationsgemäße Normal-Einbaulage eines elektrochemischen Akkumulators (30).

9. Fixierungselement nach einem der vorhergehenden Ansprüche,
**dadurch gekennzeichnet, dass**
das Fixierungselement (1) an einer zum zu fixierenden Elektrodenplattensatz (42) weisenden Unterseite wenigstens ein Pufferelement (16, 17) aus einem Material aufweist, das eine höhere Elastizität besitzt als das Material des Fixierungselements (1).

10. Fixierungselement nach Anspruch 9,
**dadurch gekennzeichnet, dass**
das Pufferelement (16, 17) im ersten Fixierungsbereich (2, 3) am Fixierungselement (1) angeordnet ist.

11. Fixierungselement nach einem der vorhergehenden Ansprüche,
**dadurch gekennzeichnet, dass**
das Fixierungselement (1) wenigstens eine oder mehrere Öffnungen (12, 13) aufweist, die zur Durchführung eines Anschlusspols (31, 32) des Akkumulators (30) eingerichtet sind.

12. Elektrochemischer Akkumulator (30) mit einem Gehäuse (33, 34),
wobei das Gehäuse einen oder mehrere Zellräume (51 , 52, 53, 54, 55, 56) aufweist und jeder Zellraum (51, 52, 53, 54, 55, 56) zur Aufnahme eines Elektrodenplattensatzes (42) des Akkumulators (30) eingerichtet ist, wobei ein Elektrodenplattensatz (42) mit wenigstens einem Zellenverbinderelement (35, 36) verbunden ist, das zur elektrischen Kontaktierung des Elektrodenplattensatzes (42) mit einem benachbarten Elektrodenplattensatz (42) oder einem Anschlusspol (31, 32) des Akkumulators (30) eingerichtet ist,
wobei in dem Gehäuse (33, 34) wenigstens ein Fixierungselement (1) nach einem der vorhergehenden Ansprüche befestigt ist, derart, dass das Fixierungselement (1) mit dem ersten Fixierungsbereich (2, 3) den Elektrodenplattensatz (42) durch direkten oder indirekten mechanischen Kontakt mit diesem mechanisch fixiert und mit dem zweiten Fixierungsbereich (4, 5) das Zellenverbinderelement (35, 36) durch direkten oder indirekten mechanischen Kontakt mit diesem mechanisch fixiert.

## Claims

1. A fixing element (1) for mechanically fixing an electrode plate set (42) of an electrochemical battery (30) in a cell chamber (51, 52, 53, 54, 55, 56) of a housing (33, 34) of the battery (30), wherein the housing (33, 34) comprises one or more cell chambers and each cell chamber is designed to accommodate an electrode plate set (42),
wherein the fixing element (1) comprises at least one first fixing region (2, 3) designed to mechanically fix the electrode plate set (42) by direct or indirect mechanical contact with same,
wherein the fixing element (1) is additionally designed to mechanically fix at least one cell connector element (35, 36) of the electrode plate set (42) mechanically fixed by the fixing element (1),
wherein the cell connector element (35, 36) is provided for the electrical contacting of the electrode plate set (42) with an adjacent electrode plate set (42) or a connection terminal (31, 32) of the battery (30), and wherein the fixing element (1) for fixing the cell connector element (35, 36) comprises at least one second fixing region (4, 5) designed to mechanically fix the cell connector element (35, 36) by direct or indirect mechanical contact with same,
**characterized in that**
the fixing element (1) comprises at least three fixing regions (6, 7, 8, 9, 10) spaced at a distance from each other which are designed to fix the fixing element (1) on the housing (33, 34) of the battery (30), and wherein at least one of the fixing regions (10) is configured with a vertical, essentially central slot (11) to receive a housing rib provided in a lower housing part (34), and wherein one, multiple or all of the fixing regions (6, 7, 8, 9, 10) are formed on outer regions of the fixing element (1) facing away from the center of said fixing element (1).

2. The fixing element according to claim 1,
**characterized in that**
one, multiple or all of the fixing regions (6, 7, 8, 9, 10) are designed for attachment to at least one inner housing wall (44, 47) of the battery (30) and/or at least one inner housing wall (44, 47) of a cell chamber (51, 52, 53, 54, 55, 56) of the battery.

3. The fixing element according to claim 1 or 2,
**characterized in that**
one, multiple or all of the fixing regions (6, 7, 8, 9, 10) are designed for attachment to the housing of the battery (30) by means of a material bond, in particular by injection-molding, surface-fusing, welding or gluing to the housing (33, 34) of the battery (30).

4. The fixing element according to one of the preceding claims,
**characterized in that**
the fixing element (1) is configured as a fixing bridge designed to attach to at least two oppositely disposed walls (44) of a cell chamber (51, 52, 53, 54, 55, 56) and thereby form a bridge between said walls (44).

5. The fixing element according to one of the preceding claims,
**characterized in that**
the fixing element (1) is designed to be disposed in the cell chamber (51, 52, 53, 54, 55, 56) above the electrode plate set (42) based on the normal installation orientation of an electrochemical battery (30) according to specification.

6. The fixing element according to one of the preceding claims,
**characterized in that**
the fixing element (1) is designed for the simultaneous fixing of at least two cell connector elements (35, 36) of the electrode plate set (42) arranged at oppositely disposed end regions of an electrode plate set (42) and comprises to that end two corresponding second fixing regions (4, 5).

7. The fixing element according to one of the preceding claims,
**characterized in that**
the fixing element (1) is of symmetrical configuration, in particular mirror-symmetrical with respect to an axis of symmetry (18).

8. The fixing element according to one of the preceding claims,
**characterized in that**
the fixing element (1) for mechanically fixing the electrode plate set (42) and/or the cell connector element (35, 36) is configured in the vertical direction and concurrently in the horizontal direction, in each case based on the normal installation orientation of an electrochemical battery (30) according to specification.

9. The fixing element according to one of the preceding claims,
**characterized in that**
the fixing element (1) comprises at least one buffer element (16, 17) at a lower side facing the electrode plate set (42) to be fixed which is made of a material which has a higher elasticity than the material of the fixing element (1).

10. The fixing element according to claim 9,
**characterized in that**
the buffer element (16, 17) is disposed in the first fixing region (2, 3) on the fixing element (1).

11. The fixing element according to one of the preceding claims,
**characterized in that**
the fixing element (1) comprises at least one or more openings (12, 13) designed for the lead-through of a connection terminal (31, 32) of the battery (30).

12. An electrochemical battery (30) having a housing (33, 34), wherein the housing comprises one or more cell chambers (51, 52, 53, 54, 55, 56) and each cell chamber (51, 52, 53, 54, 55, 56) is designed to accommodate an electrode plate set (42) of the battery (30), wherein an electrode plate set (42) is connected to at least one cell connector element (35, 36) which is designed for the electrical contacting of the electrode plate set (42) with an adjacent electrode plate set (42) or a connection terminal (31, 32) of the battery (30),
wherein at least one fixing element (1) in accordance with one of the preceding claims is affixed in the housing (33, 34) such that the fixing element (1) mechanically fixes the electrode plate set (42) by direct or indirect mechanical contact with the first fixing region (2, 3) and mechanically fixes the cell connector element (35, 36) by direct or indirect mechanical contact with the second fixing region (4, 5).

## Revendications

1. Élément de fixation (1) pour la fixation mécanique d'un lot de plaques d'électrodes (42) d'un accumulateur électrochimique (30) dans un compartiment de cellule (51, 52, 53, 54, 55, 56) d'un boîtier (33, 34) de l'accumulateur (30), le boîtier (33, 34) comprenant un ou plusieurs compartiments de cellule et chaque compartiment de cellule est aménagé pour loger un lot de plaques d'électrodes (42),
dans lequel l'élément de fixation (1) comprend au moins une première zone de fixation (2, 3) qui est aménagée pour la fixation mécanique du lot de plaques d'électrodes (42) par un contact mécanique direct ou indirect avec celle-ci,
l'élément de fixation (1) est aménagé en supplément pour la fixation mécanique d'au moins un élément de liaison de cellule (35, 36) du lot de plaques d'électrodes (42) fixé mécaniquement par l'élément de fixation (1), l'élément de liaison de cellule (35, 36) est prévu pour la mise en contact électrique du lot de plaques d'électrodes (42) avec un lot de plaques d'électrodes (42) voisin ou avec un pôle de raccordement (31, 32) de l'accumulateur (30), et
l'élément de fixation (1) pour la fixation de l'élément de liaison de cellule (35, 36) comprend au moins une seconde zone de fixation (4, 5) qui est aménagée pour la fixation mécanique de l'élément de liaison de cellule (35, 36) par un contact mécanique direct ou indirect avec celle-ci,
**caractérisé en ce que**
l'élément de fixation (1) comprend au moins trois zones de fixation (6, 7, 8, 9, 10) espacées les unes des autres qui sont aménagées pour la fixation de l'élément de fixation (1) sur le boîtier (33, 34) de l'accumulateur (30), et
l'une au moins des zones de fixation (10) pourvue d'une fente verticale (11) approximativement centrale est réalisée pour recevoir une nervure de boîtier présente dans une partie inférieure de boîtier (34), et
une, plusieurs ou toutes les zones de fixation (6, 7, 8, 9, 10) sont formées sur des zones extérieures de l'élément de fixation (1) dirigées en éloignement du centre de l'élément de fixation (1).

2. Élément de fixation selon la revendication 1,
**caractérisé en ce que**
une, plusieurs ou toutes les zones de fixation (6, 7, 8, 9, 10) sont aménagées pour la fixation sur au moins une paroi de boîtier intérieure (44, 47) de l'accumulateur (30) et/ou sur au moins une paroi de boîtier intérieure (44, 47) d'un compartiment de cellule (51, 52, 53, 54, 55, 56) de l'accumulateur.

3. Élément de fixation selon la revendication 1 ou 2,
**caractérisé en ce que**
une, plusieurs ou toutes les zones de fixation (6, 7, 8, 9, 10) sont aménagées pour la fixation sur le boîtier de l'accumulateur (30) au moyen d'une liaison par coopération de matières, en particulier par surmoulage par injection, par fusion, ou par soudage ou par collage sur le boîtier (33, 34) de l'accumulateur (30).

4. Élément de fixation selon l'une des revendications précédentes,
**caractérisé en ce que**
l'élément de fixation (1) est réalisé sous la forme d'un pont de fixation qui est aménagé pour la fixation sur au moins deux parois opposées (44) d'un compartiment de cellule (51, 52, 53, 54, 55, 56) et forme ainsi un pont entre ces parois (44).

5. Élément de fixation selon l'une des revendications précédentes,
**caractérisé en ce que**
l'élément de fixation (1) est aménagé pour être agencé dans le compartiment de cellule (51, 52, 53, 54, 55, 56) au-dessus du lot de plaques d'électrodes (42) par rapport à la position de montage normale, conforme à la spécification, d'un accumulateur électrochimique (30).

6. Élément de fixation selon l'une des revendications précédentes,
**caractérisé en ce que**
l'élément de fixation (1) est aménagé pour la fixation simultanée d'au moins deux éléments de liaison de cellule (35, 36) d'un lot de plaques d'électrodes (42), qui sont agencés sur des zones d'extrémité opposées du lot de plaques d'électrodes (42), et présente à cet effet deux secondes zones de fixation correspondantes (4, 5).

7. Élément de fixation selon l'une des revendications précédentes,
**caractérisé en ce que**
l'élément de fixation (1) est réalisé symétriquement, en particulier à symétrie de miroir par rapport à un axe de symétrie (18).

8. Élément de fixation selon l'une des revendications précédentes,
**caractérisé en ce que**
pour la fixation mécanique du lot de plaques d'électrodes (42) et/ou de l'élément de liaison de cellule (35, 36), l'élément de fixation (1) est aménagé en direction verticale et simultanément en direction horizontale respectivement par rapport à la position de montage normale conforme à la spécification d'un accumulateur électrochimique (30).

9. Élément de fixation selon l'une des revendications précédentes,
**caractérisé en ce que**
sur une face inférieure dirigée vers un lot de plaques d'électrodes (42) à fixer, l'élément de fixation (1) comprend au moins un élément formant tampon (16, 17) en un matériau qui possède une élasticité supérieure à celle du matériau de l'élément de fixation (1).

10. Élément de fixation selon la revendication 9,
**caractérisé en ce que**
l'élément formant tampon (16, 17) est agencé dans la première zone de fixation (2, 3) sur l'élément de fixation (1).

11. Élément de fixation selon l'une des revendications précédentes,
**caractérisé en ce que**
l'élément de fixation (1) présente au moins une ou plusieurs ouvertures (12, 13) qui sont aménagées pour faire traverser un pôle de raccordement (31, 32) de l'accumulateur (30).

12. Accumulateur électrochimique (30) comportant un boîtier (33, 34), le boîtier comprenant un ou plusieurs compartiments de cellule (51, 52, 53, 54, 55, 56) et chaque compartiment de cellule (51, 52, 53, 54, 55, 56) est aménagé pour loger un lot de plaques d'électrodes (42) de l'accumulateur (30),
dans lequel un lot de plaques d'électrodes (42) est relié à au moins un élément de liaison de cellule (35, 36) qui est aménagé pour la mise en contact électrique du lot de plaques d'électrodes (42) avec un lot de plaques d'électrodes (42) voisin ou avec un pôle de raccordement (31, 32) de l'accumulateur (30), et
dans le boîtier (33, 34) est fixé au moins un élément de fixation (1) selon l'une des revendications précédentes, de telle sorte que l'élément de fixation (1) fixe mécaniquement le lot de plaques d'électrodes (42) par la première zone de fixation (2, 3) par contact mécanique direct ou indirect avec celle-ci, et fixe l'élément de liaison de cellule (35, 36) par la seconde zone de fixation (4, 5) par mise en contact mécanique direct ou indirect avec celle-ci.
